# EUROPÄISCHE PATENTSCHRIFT

(11) **EP 2 137 855 B1**
(45) Veröffentlichungstag und Bekanntmachung des Hinweises auf die Patenterteilung: **23.01.2019**
(21) Anmeldenummer: 08717732.5
(22) Anmeldetag: 13.03.2008
(51) Int. Cl.: H04K 1/00, H04L 9/32, H04L 29/06, H04W 12/06

(54) **TELEKOMMUNIKATIONSVERFAHREN MIT TEILNEHMERAUTHENTISIERUNG**
TELECOMMUNICATION METHOD WITH SUBSCRIBER AUTHENTICATION
PROCÉDÉ DE TÉLÉCOMMUNICATION AVEC AUTHENTIFICATION D'ABONNÉ

(30) Priorität: 14.03.2007 DE 102007012953
(43) Veröffentlichungstag der Anmeldung: 30.12.2009
(73) Patentinhaber: Bundesdruckerei GmbH, 10958 Berlin (DE)
(72) Erfinder: BYSZIO, Frank, 16348 Wandlitz (DE); DRESSEL, Olaf, 14641 Wustermark (DE); FIEDLER, Robert, 15366 Hoppegarten GT Waldesruh (DE)
(74) Vertreter: Richardt Patentanwälte PartG mbB
(86) Internationale Anmeldenummer: PCT/EP2008/052988
(87) Internationale Veröffentlichungsnummer: WO 2008/110595

(56) Entgegenhaltungen:
- WO-A-01/91478
- US-A1- 2002 194 476
- US-E- R E36 946
- UDA R ET AL: "A proposal of voice stream authentication method with fixed length signature for IP telephony" 29. März 2006 (2006-03-29), PROCEEDINGS OF THE IASTED INTERNATIONAL CONFERENCE ON NETWORKS AND COMMUNICATION SYSTEMS ACTA PRESS ANAHEIM, CA, USA, PAGE(S) 6 PP. , ANAHEIM (US), P. 304-309 , XP008095792 ISBN: 0-88986-590-6 Seite 305, linke Spalte, Zeile 4 - Zeile 17 Absätze [03.1], [03.4]

## Beschreibung

Die Erfindung betrifft ein Telekommunikationsverfahren mit einer Authentisierung zumindest eines der Teilnehmer sowie ein entsprechendes Computerprogrammprodukt und ein Telekommunikationsgerät.

Aus dem Stand der Technik sind verschiedene Authentisierung- und Verschlüsselungsverfahren für die geschützte Telekommunikation, insbesondere zwischen Telefonen oder Mobiltelefonen, bekannt.

Aus EP 1492366 ist ein Authentisierung- und Verschlüsselungsverfahren für Mobiltelefone bekannt. Danach wird ein Java-Applet zur Durchführung der Authentisierung und Verschlüsselung verwendet. Vertrauliche Daten werden hier multimedial als Bild oder Film übertragen.

Aus US 7 120 255 ist ein Verschlüsselungsverfahren für Mobiltelefonate ohne vorherige Authentisierung der Gesprächsteilnehmer bekannt. Aus den zu übertragenden Gesprächsdaten wird eine Datei generiert, die anschließend verschlüsselt und übertragen wird.

Die DE 10300898 offenbart ein Authentisierungsmodul für Mobiltelefone, das in Form einer Software geladen wird. Mit Hilfe des Authentisierungsmoduls soll sich das Mobiltelefon gegenüber einem Netzwerk authentisieren.

Weitere Authentisierungs- und Verschlüsselungsverfahren für die geschützte Telekommunikation sind aus DE 10021833, JP 2005159959, JP 2004336602, CN 1283063, DE 69029877, WO 2006/057627 A1, EP 0 538 216 A1, EP 1 715 613 A1 und DE 4406602 bekannt.

Der Erfindung liegt demgegenüber die Aufgabe zugrunde, ein verbessertes Telekommunikationsverfahren sowie ein entsprechendes Computerprogrammprodukt und ein Telekommunikationsgerät zu schaffen.

Die der Erfindung zugrunde liegende Aufgabe wird jeweils mit den Merkmalen der unabhängigen Patentansprüche gelöst. Bevorzugte Ausführungsformen sind in den abhängigen Patentansprüchen angegeben.

Nach einer Ausführungsform der Erfindung wird ein Telekommunikationsverfahren für die Sprachkommunikation zwischen ersten und zweiten Teilnehmern, zum Beispiel über ein digitales Mobilfunknetzwerk, geschaffen. Die von den Teilnehmern verwendeten Telekommunikationsgeräte haben jeweils Schnittstellenmittel für ein Sicherheitsmodul, wie z.B. einen integrierten Chipkarten-Leser. Auf der Chipkarte eines der Teilnehmer sind dessen Teilnehmer-Identitätsdaten gespeichert, wie zum Beispiel dessen Telefonnummer. Ferner ist in einem geschützten Speicherbereich der Chipkarte ein geheimer Schlüssel des betreffenden Teilnehmers gespeichert. Anstatt einer Chipkarte kann ein so genanntes Tamper Proof Module (TPM) in das Telekommunikationsgerät integriert sein; die Notwendigkeit für den Chipkarten-Leser entfällt dann.

Zur Authentifizierung zum Beispiel des zweiten Teilnehmers gegenüber dem ersten Teilnehmer wird von dem Telekommunikationsgerät des ersten Teilnehmers die Durchführung eines Challenge-Response-Verfahrens initiiert. Hierbei wird der Prozessor der Chipkarte des zweiten Teilnehmers zur Generierung einer digitalen Signatur verwendet. Je nach Ausführungsform kann die Authentisierung einseitig oder gegenseitig erfolgen.

Nach erfolgreicher Authentisierung können die Teilnehmer über den Sprachkanal kommunizieren. Die vorhergehende Authentisierung hat dabei den Vorteil, dass die Teilnehmer hinsichtlich der Identität des jeweiligen Gegenübers sicher sein können, sodass auch vertrauliche Informationen ausgetauscht werden können. Die Authentisierung kann aber auch nach Beginn des Telefongesprächs stattfinden, wenn z.B. während des Telefongesprächs das Bedürfnis zum Austausch besonders vertraulicher Informationen entsteht.

Die über den Sprachkanal übertragenen Sprachdaten werden von dem sendenden Teilnehmer vor der Sendung digital signiert. Hierzu wird beispielsweise jeweils für einen Block der Sprachdaten ein Hash-Wert erzeugt, der mit Hilfe des privaten Schlüssels des sendenden Teilnehmers verschlüsselt wird, so dass man eine digitale Signatur des betreffenden Blocks der Sprachdaten erhält. Die digitalen Signaturen werden ebenfalls über den Sprachkanal von dem sendenden Teilnehmer an den empfangenden Teilnehmer übertragen, beispielsweise, in dem an jeden Block der Sprachdaten, die den Block betreffende digitale Signatur angehängt wird.

Der empfangende Teilnehmer prüft dann die digitale Signatur der von dem sendenden Teilnehmer empfangenen Sprachdaten, um sich darüber Gewissheit zu verschaffen, dass die empfangenen Sprachdaten auch tatsächlich von dem sendenden Teilnehmer herrühren. Hierdurch wird sichergestellt, dass nach der Authentifizierung der Teilnehmer auf dem Sprachkanal der empfangende Teilnehmer nicht durch manipulierte oder synthetisierte Sprachdaten getäuscht werden kann.

Beispielsweise wird von einem Angreifer eine Sprachausgabe synthetisiert, die der natürlichen Stimme des sendenden Teilnehmers zum Verwechseln ähnlich klingt. Entsprechende Verfahren zur Sprachsynthese sind aus dem Stand der Technik an sich bekannt. Derart synthetisierte Sprachdaten können von dem empfangenen Teilnehmer als solche erkannt werden, da diese nicht von dem sendenden Teilnehmer herrühren, und daher auch keine valide Signatur tragen können.

Die synthetisierten Sprachdaten können beispielsweise bei einer Telefonkonferenz übertragen werden. Wenn an der Telefonkonferenz beispielsweise die Teilnehmer A, B und C teilnehmen, so kann der Teilnehmer C einen gesprochenen Text an den Teilnehmer A übertragen, der so klingt, als käme er von dem Teilnehmer B. Der Teilnehmer A erkennt diesen Manipulationsversuch sofort, da sein Telekommunikationsgerät die fehlende oder nicht valide digitale Signatur der von dem Teilnehmer C empfangenen Sprachdaten erkennt und ein entsprechendes Signal über die Nutzerschnittstelle abgibt.

Die Erfindung ist besonders vorteilhaft, da sie eine besonders sichere Form der Authentisierung bei gleichzeitig minimalem Implementierungsaufwand ermöglicht. Dies ist insbesondere dann der Fall, wenn es sich bei den Telekommunikationsgeräten um übliche Mobilfunkgeräte, beispielsweise nach dem GSM- oder UMTS-Standard, handelt, die ohnehin über einen integrierten Chipkarten-Leser für eine Chipkarte, d.h. das so genannte Subscriber Identity Module (SIM), beinhalten.

Auf dem SIM wird zusätzlich zu den üblicherweise auf dem SIM gespeicherten Teilnehmer-Identitätsdaten, d.h. insbesondere der Telefonnummer des Teilnehmers, dessen geheimer Schlüssel ("private key") zur Durchführung eines asymmetrischen Verschlüsselungsverfahrens für die Generierung einer digitalen Signatur gespeichert. Die Speicherung des geheimen Schlüssels erfolgt vorzugsweise in einem besonders geschützten Speicherbereich der Chipkarte, auf die kein externer Zugriff möglich ist. Da die Chipkarte über einen eigenen Prozessor verfügt, muss der geheime Schlüssel die Chipkarte für die Generierung der digitalen Signatur nicht verlassen, wodurch ein Höchstmaß an Sicherheit gegeben ist.

Die weiteren für die Durchführung von Ausführungsformen des erfindungsgemäßen Telekommunikationsverfahrens erforderlichen Funktionalitäten des Mobilfunkgeräts können in Form eines Computerprogramms zur Verfügung gestellt werden, das von einem Prozessor des Mobilfunkgeräts ausgeführt wird. Bei diesem Computerprogramm kann es sich um ein über die Luftschnittstelle des Mobilfunkgeräts nachladbares Programm handeln, wie zum Beispiel ein so genanntes Java-Applet. Die erforderlichen Funktionalitäten können jedoch auch ganz oder teilweise durch den Prozessor der Chipkarte implementiert werden, wobei jedoch eine zumindest teilweise Implementierung durch den Prozessor des Mobilfunkgeräts vorteilhaft ist, da dieser im Allgemeinen wesentlich leistungsfähiger als der Mikroprozessor der Chipkarte ist.

Nach einer Ausführungsform der Erfindung erfolgt der Aufbau des Sprachkanals über ein Telekommunikationsnetz, insbesondere ein digitales Mobilfunknetz. Der Sprachkanal kann aber auch ohne ein Telekommunikationsnetz unmittelbar zwischen den Telekommunikationsgeräten aufgebaut werden, z.B. durch Aufbau einer direkten Funkverbindung. Insbesondere kann es sich bei den Telekommunikationsgeräten um Funkgeräte handeln, insbesondere zum Einsatz für Behörden, die Polizei, für militärische Anwendungen oder für Privatpersonen, die gebührenfrei miteinander telefonieren möchten.

Nach einer Ausführungsform der Erfindung erfolgt die Übertragung der Daten für die Durchführung des Challenge-Response-Verfahrens über ein akustisches Modulationsverfahren über den Sprachkanal. Beispielsweise verfügen die Telekommunikationsgeräte hierzu jeweils über eine Modem-Funktion. Die akustische Modulation kann beispielsweise in Form einer Amplituden- und/oder Frequenzmodulation erfolgen.

Nach einer Ausführungsform der Erfindung erfolgt die Sprachkommunikation zwischen den Teilnehmern nach der Authentifizierung verschlüsselt. Hierzu wird beispielsweise ein symmetrischer Schlüssel zur Verschlüsselung der Sprachkommunikation zwischen den Telekommunikationsgeräten der Teilnehmer ausgetauscht. Bei dem symmetrischen Schlüssel kann es sich um einen so genannten Session Key handeln. Die von einem Telekommunikationsgerät eines der Teilnehmer generierten digitalen Sprachdaten werden mit Hilfe dieses Session Keys verschlüsselt, bevor sie über den Sprachkanal übertragen werden. Die Übertragung dieser verschlüsselten Daten kann wiederum mit Hilfe eines akustischen Modulationsverfahrens über die Modemfunktion erfolgen.

Nach einer Ausführungsform der Erfindung wird zur Verschlüsselung der Sprachkommunikation ein biometrischer Schlüssel verwendet. Der biometrische Schlüssel wird aus einem biometrischen Merkmal eines der Teilnehmer gewonnen und dem jeweils anderen Teilnehmer als Session key mitgeteilt. Der biometrische Schlüssel kann in dem Telekommunikationsgerät des einen der Teilnehmer persistent abgespeicht sein oder er kann jeweils durch Erfassung der biometrischen Daten über einen geeigneten Sensor des Telekommunikationsgeräts, wie z.B. einen Fingerabdrucksensor, jedes Mal neu generiert werden.

Nach einer Ausführungsform der Erfindung erfolgt die Kommunikation zwischen den Telekommunikationsgeräten mit Hilfe eines TDMA-Verfahrens, wie es zum Beispiel in dem GSM Standard eingesetzt wird. Beispielsweise werden die innerhalb eines Zeitschlitzes des TDMA-Verfahrens zu übertragenden Sprachdaten mit Hilfe des Session-Keys verschlüsselt.

Nach einer Ausführungsform der Erfindung erfolgt die Telekommunikation mit Hilfe eines CDMA-Verfahrens, wie es zum Beispiel im UMTS-Standard zur Anwendung kommt. In diesem Fall können die mit jedem so genannten chip übertragenen Daten mit Hilfe des Session Keys verschlüsselt sein.

Die verschlüsselten Daten können also auch ohne akustische Modulation über den Sprachkanal übertragen werden, indem die verschlüsselten Daten zum Beispiel als die Nutzdaten eines Zeitschlitzes in einem TDMA-Verfahren oder als die Nutzdaten eines chips in einem CDMA-Verfahren übertragen werden. Dies hat den Vorteil, dass damit eine höhere Datenrate und infolgedessen auch eine höhere Sprachqualität erreichbar ist.

In einem weiteren Aspekt betrifft die Erfindung ein Computerprogrammprodukt zur Durchführung eines erfindungsgemäßen Verfahrens, wobei das Computerprogrammprodukt insbesondere als Java-Applet ausgebildet sein kann.

In einem weiteren Aspekt betrifft die Erfindung ein Telekommunikationsgerät zur Durchführung eines erfindungsgemäßen Verfahrens. Bei dem Telekommunikationsgerät kann es sich um ein Festnetztelefon, ein Mobilfunkgerät, insbesondere ein Handy, einen PDA mit Mobilfunkschnittstelle oder ein anderes elektronisches Gerät mit einer Mobilfunkschnittstelle handeln.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Telekommunikationsgeräte,
- Figur 2: ein Flussdiagramm einer Ausführungsform eines erfindungsgemäßen Authentisierungsverfahrens,
- Figur 3: eine Ausführungsform eines erfindungsgemäßen Verfahrens zur geschützten und verschlüsselten Vollduplex-Kommunikation über einen Sprach kanal,
- Figur 4: eine weitere Ausführungsform eines erfindungsgemäßen Telekommunikationsgeräts,
- Figur 5: ein Blockdiagramm einer Konferenzschaltung von Ausführungsformen erfindungsgemäßer Telekommunikationsgeräte.

Elemente der nachfolgenden Figuren, die einander entsprechen, sind mit denselben Bezugszeichen gekennzeichnet.

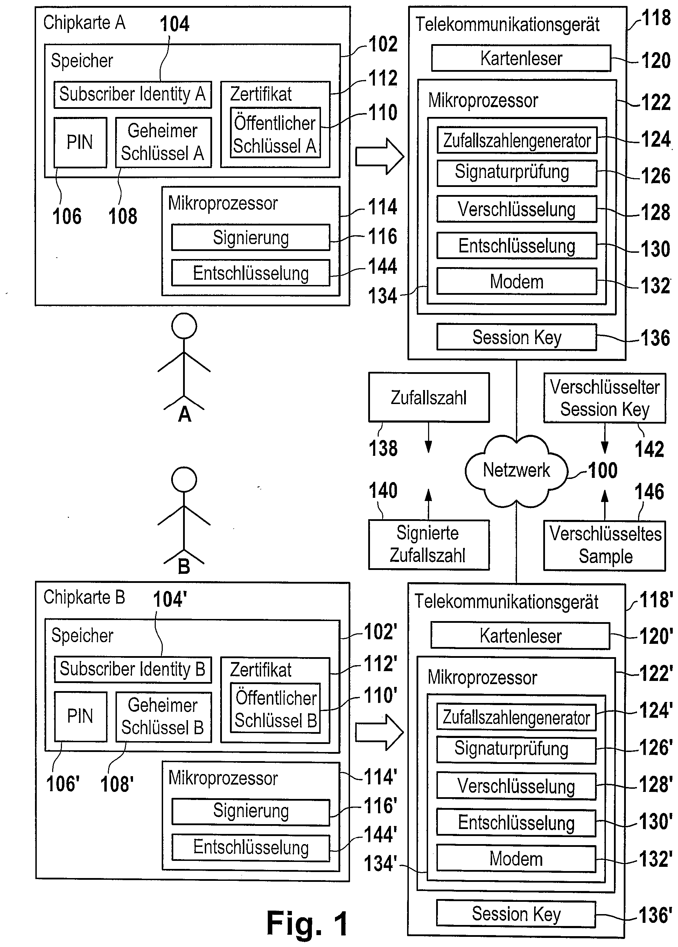

Die Figur 1 zeigt schematisch die Teilnehmer ("subscriber") A und B eines Telekommunikationsnetzwerks 100, wobei es sich um ein digitales Mobilfunknetz, insbesondere nach dem GSM-, UMTS- oder einem anderen Standard handeln kann. Dem Teilnehmer A ist eine Chipkarte A zugeordnet. Hierbei kann es sich um ein so genanntes Subscriber Identity Module (SIM) handeln.

Die Chipkarte A hat einen elektronischen Speicher 102. Der Speicher 102 dient zur Speicherung der Teilnehmer-Identitätsdaten ("subscriber identity") 104 des Teilnehmers A sowie einer geheimen Kennung, wie zum Beispiel einer PIN 106, zur Freischaltung der Chipkarte A. Die PIN 106 ist nur dem Teilnehmer A bekannt.

In einem geschützten Bereich des Speichers 102 ist ein geheimer Schlüssel 108 des Teilnehmers A gespeichert. Auf diesen geschützten Speicherbereich der Chipkarte A kann von außen kein Zugriff erfolgen, d.h. der geheime Schlüssel 108 kann aus der Chipkarte A nicht ausgelesen werden. Zu dem geheimen Schlüssel 108 des Teilnehmers A gehört ein öffentlicher Schlüssel 110.

Der öffentliche Schlüssel 110 kann als Teil eines Zertifikats 112 einer Public Key Infrastructure (PKI) in dem Speicher 102 gespeichert sein. Der öffentliche Schlüssel 110 kann alternativ oder zusätzlich auch auf einem öffentlichen Verzeichnisserver, der zum Beispiel über das Netzwerk 110 abfragbar ist, gespeichert sein. Bei dem geheimen Schlüssel 108 und dem öffentlichen Schlüssel 110 handelt es sich um ein asymmetrisches Schlüsselpaar eines asymmetrischen Verschlüsselungsverfahrens.

Die Chipkarte A hat einen Mikroprozessor 114, der unter anderem zur Ausführung einer Programmkomponente 116 für die Generierung einer digitalen Signatur mit Hilfe des geheimen Schlüssels 108 und einer Programmkomponente 144 zur Entschlüsselung einer digitalen Signatur mit Hilfe des öffentlichen Schlüssels 110 dient. Die Chipkarte B des Teilnehmers B ist prinzipiell gleich aufgebaut wie die Chipkarte A, wie in der Figur 1 dargestellt.

Der Teilnehmer A verfügt über ein Telekommunikationsgerät 118, insbesondere ein Mobilfunkgerät, wie zum Beispiel ein so genanntes Handy, mit einem integrierten Kartenleser 120, der eine Schnittstelle zu der Chipkarte A des Teilnehmers A zur Verfügung stellt. Zum Betrieb des Telekommunikationsgeräts 118 führt der Teilnehmer A also seine Chipkarte A in den Kartenleser 120 des Telekommunikationsgeräts 118 ein.

Das Telekommunikationsgerät 118 hat einen Mikroprozessor 122 zur Ausführung einer Programmkomponente 124, durch die ein Zufallszahlengenerator zur Verfügung gestellt wird, einer Programmkomponente 126 für die Prüfung einer digitalen Signatur, einer Programmkomponente 128 für die Durchführung einer Verschlüsselung, einer Programmkomponente 130 für die Durchführung einer Entschlüsselung und einer Programmkomponente 132 zur Verfügungstellung einer Modemfunktionalität.

Die Programmkomponenten 124 bis 132 können ganz oder teilweise in einem Applet 134 beinhaltet sein, insbesondere einem Java-Applet. Das Applet 134 kann nachträglich auf dem Telekommunikationsgerät 118 installiert werden, beispielsweise indem das Applet 134 über die Luftschnittstelle des Telekommunikationsgeräts 118 über das Netzwerk 100 geladen wird. Auch die Programmkomponente 116 und/oder 144 kann über die Luftschnittstelle des Telekommunikationsgeräts 118 nachträglich geladen werden, insbesondere mittels eines so genannten over-the-air-Verfahrens.
Das Telekommunikationsgerät 118 hat einen Speicher 136 zur Speicherung eines Session Keys für die Verschlüsselung der Sprachkommunikation durch die Programmkomponente 128 bzw. die Entschlüsselung der Sprachkommunikation durch die Programmkomponente 130.

Das Telekommunikationsgerät 118', über das der Teilnehmer B verfügt, ist prinzipiell gleich aufgebaut wie das Telekommunikationsgerät 118.

Für die Durchführung eines Telefonats zwischen dem Teilnehmer A und dem Teilnehmer B wird beispielsweise wie folgt vorgegangen: Der Teilnehmer A wählt die Telefonnummer des Teilnehmers B auf seinem Telekommunikationsgerät 118, sodass zwischen dem Telekommunikationsgerät 118 und dem Telekommunikationsgerät 118' über das Telekommunikationsnetzwerk 100 ein echtzeitfähiger Übertragungskanal für die Sprachkommunikation aufgebaut wird. Vorzugsweise vor Beginn des Telefongesprächs zwischen den Teilnehmern A und B erfolgt zunächst eine Authentisierung. Die Authentisierung kann aber auch nach Beginn des Telefongesprächs stattfinden, wenn z.B. während des Telefongesprächs das Bedürfnis zum Austausch besonders vertraulicher Informationen entsteht. Beispielsweise wird zunächst der Teilnehmer B gegenüber dem Teilnehmer A authentisiert.

Hierzu wird zunächst durch die Programmkomponente 124 eine zufällige Kennung generiert. Alternativ kann auch der Teilnehmer A über eine Nutzerschnittstelle des Telekommunikationsgeräts 118 aufgefordert werden, eine solche von dem Teilnehmer A auszuwählende zufällige Kennung einzugeben. Bei der zufälligen Kennung kann es sich zum Beispiel um eine Zufallszahl 138 handeln, insbesondere eine Pseudozufallszahl, die von dem Telekommunikationsgerät 118 über das Telekommunikationsnetzwerk 100 an das Telekommunikationsgerät 118' übertragen wird, und zwar über den zuvor aufgebauten Sprachkanal.

Zur Übertragung über den Sprachkanal kann von der Programmkomponente 132 ein moduliertes akustisches Signal generiert werden, welches sich zur Übertragung über den Sprachkanal eignet. Hierbei kann es sich zum Beispiel um eine Klangfolge oder eine Melodie handeln, in die durch entsprechende Modulation die Zufallszahl 138 eingebettet ist. Insbesondere können für die Modulation Amplituden- und/oder Frequenzmodulationsverfahren eingesetzt werden.

Durch die Programmkomponente 132' des Telekommunikationsgeräts 118' wird durch Demodulation des über den Sprachkanal empfangenen akustischen Signals die Zufallszahl 138 zurückgewonnen. Die Zufallszahl wird dann von dem Applet 134' über den Kartenleser 120' an die Chipkarte B übergeben.

Dort wird durch Ausführung der Programmkomponente 116 mit Hilfe des geheimen Schlüssels 108' des Teilnehmers B eine digitale Signatur 140 der Zufallszahlen erzeugt. Das Zertifikat 112' mit dem öffentlichen Schlüssel 110' des Teilnehmers B kann mit der digitalen Signatur 140 zusammen über den zuvor aufgebauten Sprachkanal von dem Telekommunikationsgerät 118' über das Telekommunikationsnetzwerk 100 zu dem Telekommunikationsgerät 118 übertragen werden. Dies kann wiederum aufgrund der Generierung eines entsprechend modulierten akustischen Signals durch die Programmkomponente 132' erfolgen.

Die Programmkomponente 132 des Telekommunikationsgeräts 118 demoduliert das über den Sprachkanal von dem Telekommunikationsgerät 118' empfangene akustische Signal, sodass seitens des Telekommunikationsgeräts 118 die signierte Zufallszahl 140 und gegebenenfalls das Zertifikat 112' mit dem öffentlichen Schlüssel 110' gewonnen wird. Die digitale Signatur 140 wird durch Ausführung der Programmkomponente 126 entschlüsselt und das Ergebnis der Entschlüsselung mit der ursprünglich gesendeten Zufallszahl 138 verglichen. Sofern das Resultat der Entschlüsselung der digitalen Signatur 140 mit der ursprünglich gesendeten Zufallszahl 138 übereinstimmt, so gilt der Teilnehmer B gegenüber dem Teilnehmer A als authentifiziert, d.h. der Teilnehmer A kann sicher sein, dass er tatsächlich mit dem Teilnehmer B telefoniert.

Alternativ zu der oben beschriebenen Ausführungsform eines Challenge-Response-Verfahrens können auch andere Challenge-Response-Verfahren für die Authentisierung zur Anwendung kommen.

Nach der Authentisierung des Teilnehmers B gegenüber dem Teilnehmer A kann analog vorgegangen werden, um auch den Teilnehmer A gegenüber dem Teilnehmer B zu authentisieren.

Sprachdaten, die nach der Authentisierung, beispielsweise des Teilnehmers B gegenüber dem Teilnehmer A über den Sprachkanal übertragen werden, werden vor der Übertragung von dem Teilnehmer B signiert. Dies kann blockweise dadurch erfolgen, dass aus den während eines bestimmten Zeitintervalls von dem Teilnehmer B erfassten, digitalisierten Sprachdaten ein Hash-Wert gebildet wird, welcher dann mit dem geheimen Schlüssel 108' des Teilnehmers B verschlüsselt wird, woraus die digitale Signatur dieses Sprachdatenblocks resultiert.

Diese digitale Signatur wird beispielsweise an die Sprachdaten angehängt und über den Sprachkanal durch Modulation übertragen. Das Zeitintervall für die blockweise Signierung der Sprachdaten kann durch die verwendete Mobilfunktechnologie gegeben sein, das heißt es können die Sprachdaten jeweils eines oder mehrerer aufeinander folgender Zeitschlitze oder Chips signiert werden.

Die Signatur kann aber auch so erfolgen, dass die Sprachdaten von dem Telekommunikationsgerät 118' des Teilnehmers B jeweils für einen kurzen Zeitraum von einigen Millisekunden bis einigen Sekunden oder Minuten aufgezeichnet werden. Ein durch Aufzeichnung der Sprachdaten während eines solchen Zeitintervalls gewonnener Block wird dann digital signiert und die digitale Signatur wird von dem Teilnehmer B an den Teilnehmer A über den Sprachkanal übertragen. Der Speicher für die Speicherung der Sprachdaten während des Zeitintervalls wird nach der Generierung der digitalen Signatur mit den Sprachdaten eines nachfolgenden Zeitintervalls überschrieben.

Das Telekommunikationsgerät 118, welches die signierten Sprachdaten von dem Telekommunikationsgerät 118' empfängt, prüft die Korrektheit der digitalen Signaturen. Wenn eine der Signaturen nicht in Ordnung ist, generiert das Telekommunikationsgerät 118 ein Signal, welches über eine Nutzerschnittstelle an den Teilnehmer A ausgegeben wird, um diesen darüber in Kenntnis zu setzen, dass die empfangenen Sprachdaten nicht authentisch sind, und möglicherweise nicht von dem Teilnehmer B stammen.

Wenn nach der einseitigen oder gegenseitigen Authentisierung der Teilnehmer A und/oder B das nachfolgende Telefongespräch zur Sicherung von dessen Vertraulichkeit verschlüsselt werden soll, kann wie folgt vorgegangen werden: Beispielsweise die Programmkomponente 124 des Telekommunikationsgeräts 118 generiert nach erfolgreicher Authentifizierung des Teilnehmers B eine weitere Zufallszahl, bei der es sich um einen so genannten Session Key für die nachfolgende verschlüsselte Sprachkommunikation handelt. Der Session Key kann als symmetrischer Schlüssel ausgebildet sein. Der Session Key wird in dem Speicher 136 gespeichert.

Der von der Programmkomponente 124 generierte Session Key wird mit Hilfe des zuvor von dem Telekommunikationsgerät 118' empfangenen öffentlichen Schlüssel 110' des Teilnehmers B durch das Applet 134 verschlüsselt. Der resultierte verschlüsselte Session Key 142 wird dann von dem Telekommunikationsgerät 118 über den Sprachkanal durch akustische Modulation übertragen, wobei die Programmkomponente 132 ein entsprechend den zu übertragenden Daten des verschlüsselten Session Keys 142 für die Übertragung über den Sprachkanal geeignetes akustisches Signal generiert. Dieses Signal wird durch die Programmkomponente 132' des Telekommunikationsgeräts 118' demoduliert, sodass das Telekommunikationsgerät 118 den verschlüsselten Session Key 142 gewinnt.

Dieser wird von dem Applet 134' über den Kartenleser 120' an die Chipkarte B übertragen. Der Mikroprozessor 114' führt daraufhin die Programmkomponente 144' aus, welche den verschlüsselten Session Key 142 mit Hilfe des geheimen Schlüssels 108' entschlüsselt. Das Ergebnis der Entschlüsselung, d.h. der Session Key, wird von der Chipkarte B über den Kartenleser 120' an das Telekommunikationsgerät 118' übergeben. Der Session Key wird dann auch in dem Speicher 136' des Telekommunikationsgeräts 118' gespeichert, sodass beide Telekommunikationsgeräte 118, 118' über denselben Session Key verfügen.

Spricht nachfolgend beispielsweise der Teilnehmer B in sein Telekommunikationsgerät 118', so werden die daraus resultierenden Abtastwerte in an sich bekannter Art und Weise digitalisiert. Beispielsweise wird jeder digitalisierte Abtastwert des von dem Teilnehmer B erfassten Sprachsignals durch Ausführung der Programminstruktionen 128' mit Hilfe des Session Keys verschlüsselt und als verschlüsselter Abtastwert ("sample") 146 an das Telekommunikationsgerät 118 übertragen, wo der Abtastwert 146 durch die Programmkomponente 130 mit Hilfe des Session Keys wieder entschlüsselt wird. Analog verhält es sich in der umgekehrten Richtung, d.h. hinsichtlich der Verschlüsselung des Sprachsignals des Teilnehmers A.

Der verschlüsselte Abtastwert 146 kann wie bereits zuvor die Zufallszahl 138, die digitale Signatur 140 bzw. der verschlüsselte Session Key mittels akustischer Modulation über den Sprachkanal übertragen werden, wie es auch in Gegenrichtung von dem Teilnehmer A zu dem Teilnehmer B der Fall sein kann.

Vorzugsweise werden die digitalen Abtastwerte einer Datenkompression unterzogen. Diese kann mit Hilfe eines Vocoders (voice encoder) erfolgen, wie er z.B. im GSM Standard Verwendung findet. Die Kompression kann auch erfolgen, indem das Sprachsignal einer speech-to-text Konvertierung unterzogen wird. Die aus der Datenkompression resultierenden Daten werden dann mit dem Session Key verschlüsselt, bevor sie über den Sprachkanal übertragen werden.

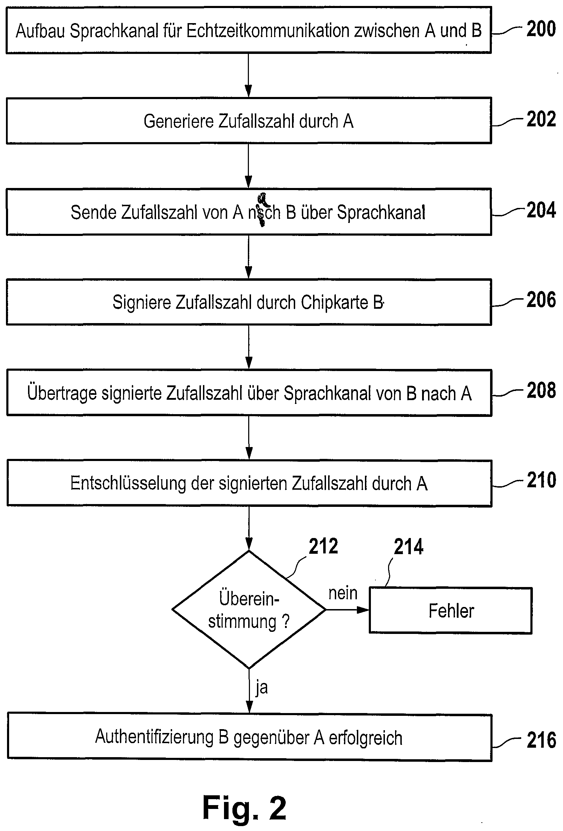

Die Figur 2 zeigt ein entsprechendes Flussdiagramm. In dem Schritt 200 wird ein Sprachkanal für die Echtzeitkommunikation, zum Beispiel über ein digitales Mobilfunknetz zwischen den Mobilfunkgeräten zweier Teilnehmer A und B aufgebaut, indem der eine Teilnehmer den anderen auf herkömmliche Art und Weise anruft. Nach dem Aufbau des Sprachkanals wird zum Beispiel durch das Mobilfunkgerät des Teilnehmers A eine Zufallszahl generiert (Schritt 202). Diese Zufallszahl wird in dem Schritt 204 über den Sprachkanal von dem Mobilfunkgerät des Teilnehmers A an das Mobilfunkgerät des Teilnehmers B übertragen, beispielsweise durch Generierung eines entsprechend modulierten akustischen Signals, welches sich für die Übertragung über den Sprachkanal eignet.

In dem Schritt 206 demoduliert das Mobilfunkgerät des Teilnehmers B das von dem Mobilfunkgerät des Teilnehmers A empfangene akustische Signal, um die Zufallszahl zu empfangen. Diese Zufallszahl wird mit Hilfe des geheimen Schlüssels des Teilnehmers B signiert und die signierte Zufallszahl wird in dem Schritt 208 von dem Mobilfunkgerät des Teilnehmers B an das Mobilfunkgerät des Teilnehmers A zurück übertragen. Dies erfolgt wiederum über den Sprachkanal durch Erzeugung eines entsprechend modulierten akustischen Signals.

In dem Schritt 210 demoduliert das Mobilfunkgerät des Teilnehmers A das über den Sprachkanal von dem Mobilfunkgerät des Teilnehmers B empfangene akustische Signal, und empfängt so die signierte Zufallszahl. Die signierte Zufallszahl wird mit Hilfe des öffentlichen Schlüssels des Teilnehmers B entschlüsselt.

Der öffentliche Schlüssel des Teilnehmers B kann ebenfalls über den Sprachkanal von dem Mobilfunkgerät des Teilnehmers B durch das Mobilfunkgerät des Teilnehmers A empfangen werden oder auf einem anderen Weg wie zum Beispiel von einem öffentlichen Verzeichnisserver oder er kann aus einem Adressbucheintrag des Mobilfunkgeräts des Teilnehmers A oder der Chipkarte des Teilnehmers A gelesen werden.

In dem Schritt 212 wird von dem Mobilfunkgerät des Teilnehmers A geprüft, ob das Ergebnis der Entschlüsselung des Schritts 210 mit der in dem Schritt 202 generierten Zufallszahl übereinstimmt. Ist dies nicht der Fall, so wird in dem Schritt 214 eine Fehlermeldung abgegeben, um dem Teilnehmer A zu signalisieren, dass die Authentifizierung des Teilnehmers B fehlgeschlagen ist. Im gegenteiligen Fall wird in dem Schritt 216 ein Signal abgegeben, welches dem Teilnehmer A signalisiert, dass die Authentifizierung des Teilnehmers B erfolgreich war. Nachfolgend können die Verfahrensschritte 200 bis 216 nochmals ausgeführt werden, wobei die Rollen der Teilnehmer A und B vertauscht werden, um den Teilnehmer A gegenüber dem Teilnehmer B zu authentifizieren.

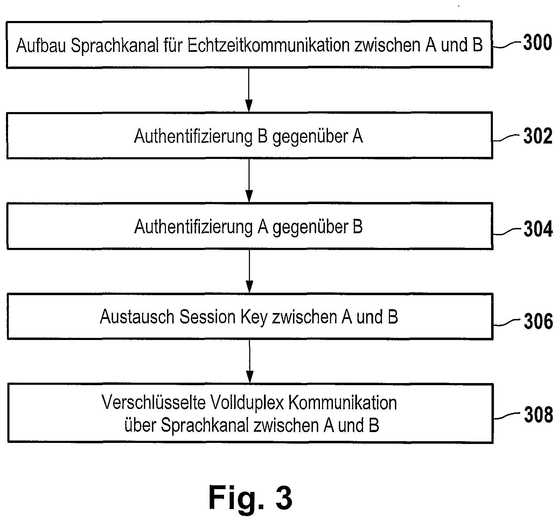

Die Figur 3 zeigt eine weitere Ausführungsform eines erfindungsgemäßen Verfahrens. In dem Schritt 300 wird für die Durchführung eines Telefonats zwischen den Teilnehmern A und B eines Mobilfunknetzes ein Sprachkanal für die Echtzeitkommunikation aufgebaut. In dem Schritt 302 wird der Teilnehmer B gegenüber dem Teilnehmer A mit Hilfe eines Challenge-Response-Verfahrens authentisiert, beispielsweise nach dem Verfahren der Figur 2. In dem Schritt 304 wird das entsprechende Verfahren zur Authentifizierung des Teilnehmers A gegenüber dem Teilnehmer B angewendet. Die für die Durchführung der Challenge-Response-Verfahren benötigten Daten werden zumindest teilweise über den Sprachkanal übertragen.

In dem Schritt 306 tauschen die Teilnehmer A und B nach erfolgreicher Authentisierung einen Session Key aus. Dieser Session Key wird für die nachfolgende verschlüsselte Vollduplex-Sprachkommunikation über den Sprachkanal verwendet. Alternativ oder ergänzend zu der Verschlüsselung werden die Sprachdaten, die von den Teilnehmern A und B ausgetauscht werden, blockweise digital signiert. Der jeweils empfangende Teilnehmer kann durch Verifikation der digitalen Signatur von über den Sprachkanal empfangenen Sprachdaten prüfen, ob die Sprachdaten authentisch sind.

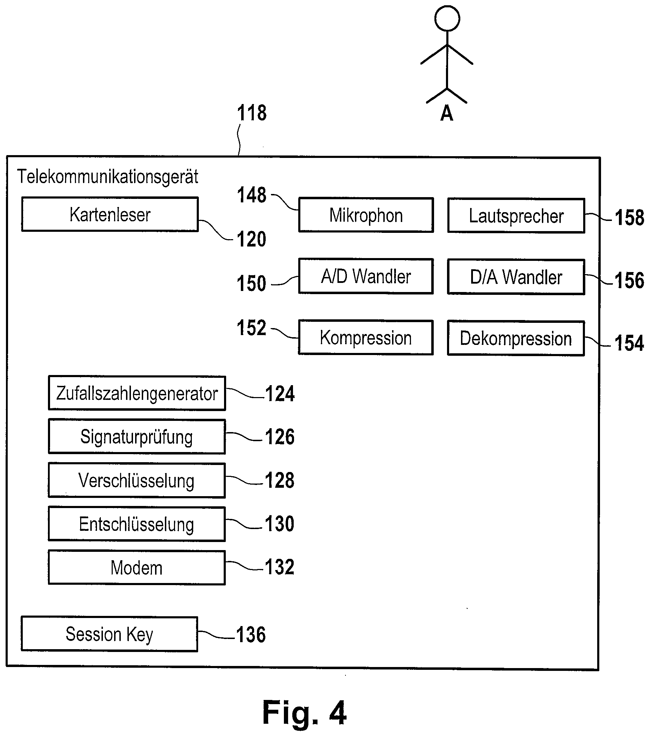

Die Figur 4 zeigt eine Ausführungsform eines erfindungsgemäßen Telekommunikationsgeräts 118. Das Telekommunikationsgerät 118 hat ein Mikrophon 148 zur Erfassung eines Sprachsignals des Teilnehmers A. Dieses Sprachsignal wird mit Hilfe des Wandlers 150 abgetastet und digitalisiert. Die daraus resultierenden Sprachdaten werden von einem Datenkompressionsmodul 152 des Telekommunikationsgeräts 118 komprimiert. Beispielsweise kann das Datenkompressionsmodul 152 einen so genannten Vocoder beinhalten. Die aufgrund der Datenkompression erhaltenen Daten werden mit Hilfe des in dem Speicher 136 gespeicherten Session Keys verschlüsselt und über einen Sprachkanal übertragen. Dies kann durch Generierung eines entsprechend modulierten akustischen Signals durch die Programminstruktionen 132 erfolgen.

Die verschlüsselten Daten können aber auch ohne akustische Modulation über den Sprachkanal übertragen werden, indem die verschlüsselten Daten zum Beispiel als die Nutzdaten eines Zeitschlitzes in einem TDMA-Verfahren oder als die Nutzdaten eines chips in einem CDMA-Verfahren übertragen werden.

Entsprechendes gilt für den Empfang des Sprachsignals von dem Teilnehmer B. Hierzu hat das Telekommunikationsgerät ein Datenkompressionsmodul 154, einen Wandler 156 für die Digital/Analog-Wandlung und einen Lautsprecher 158 für die Wiedergabe des Sprachsignals.

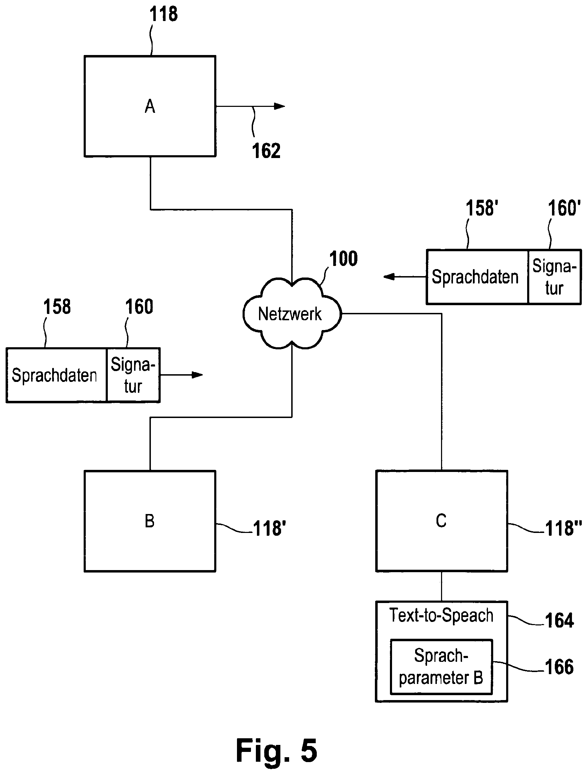

Die Figur 5 zeigt ein Blockdiagramm einer Konferenzschaltung, wobei die Telekommunikationsgeräte 118 und 118' der Teilnehmer A und B (vgl. Figur 1) sowie zusätzlich das Telekommunikationsgerät 118" eines Teilnehmers C über das Netzwerk 100 zu einer Telefonkonferenz zusammengeschaltet sind. Die Telekommunikationsgeräte 118, 118' und 118" können dabei prinzipiell so wie in der Figur 1 dargestellt, aufgebaut sein.

Die Sprachdaten, die von dem Teilnehmer B an die Teilnehmer A und C übertragen werden sollen, werden von dem Telekommunikationsgerät 118' des Teilnehmers B blockweise signiert. Die Figur 5 zeigt exemplarisch einen Block 158 von Sprachdaten, die während eines vorgegebenen Zeitintervalls von dem Teilnehmer B durch das Telekommunikationsgerät 118' durch Abtastung digital erfasst worden sind.

Das Zeitintervall für die Erfassung eines Blocks 158 kann dabei beispielsweise zwischen einer Millisekunde und einigen Sekunden oder Minuten betragen. Der Block 158 wird mit Hilfe des geheimen Schlüssels 108' des Teilnehmers B digital signiert und die daraus resultierende digitale Signatur 160 wird zusammen mit dem Block 158 über den Sprachkanal von dem Telekommunikationsgerät 118' über das Netzwerk 100 gesendet.

Die empfangenden Telekommunikationsgeräte, insbesondere das Telekommunikationsgerät 118 des Teilnehmers A, können die Signatur 160 verifizieren. Falls sich die Signatur 160 als nicht valide erweist, kann das Telekommunikationsgerät 118 ein Signal 162 über die Nutzerschnittelle des Telekommunikationsgeräts 118 ausgeben, um den Teilnehmer A darüber zu informieren, dass die empfangenen Sprachdaten möglicherweise nicht authentisch sind. Alternativ oder zusätzlich kann das Telekommunikationsgerät 118 aufgrund des Signals 162 die Telefonkonferenz automatisch abbrechen. Dadurch wird ein möglicher Täuschungsversuch des Teilnehmers C abgewehrt. Ein solcher Täuschungsversuch könnte wie folgt aussehen:

Das Telekommunikationsgerät 118" des Teilnehmers C hat ein Modul 164 zur synthetischen Spracherzeugung oder das Telekommunikationsgerät 118" ist an ein solches Modul angeschlossen. Das Modul 164 kann beispielsweise ein so genanntes Text-To-Speach Verfahren implementieren. Dieses basiert auf in einem Speicher 166 gespeicherten Sprachparametern desjenigen Teilnehmers, dessen natürliche Sprache nachgeahmt werden soll. Beispielsweise sind in dem Speicher 166 die Sprachparameter des Teilnehmers B gespeichert. Der Teilnehmer C kann in den Besitz der Sprachparameter des Teilnehmers B kommen, indem er die von dem Teilnehmer B empfangenen Sprachdaten entsprechend auswertet.

Wenn der Teilnehmer C während der Telefonkonferenz eine sprachliche Äußerung des Teilnehmers B gegenüber dem Teilnehmer A vortäuschen möchte, so gibt er in eine Tastatur einen Text ein, die von dem Modul 164 mit Hilfe der Sprachparameter des Teilnehmers B in ein Sprachsignal umgewandelt wird, welches einer natürlich sprachlichen Äußerung des Teilnehmers B mehr oder weniger originalgetreu entspricht. Dieses synthetisierte Sprachsignal wird blockweise signiert über den Sprachkanal übertragen, wobei exemplarisch ein Block 158' mit einer Signatur 160' in der Figur 5 gezeigt ist. Die Signatur 160' kann aber von dem Telekommunikationsgerät 118 des Teilnehmers A nicht verifiziert werden, da sich der Teilnehmer C nicht im Besitz des geheimen Schlüssels 108' des Teilnehmers B befindet. Das Telekommunikationsgerät 118 erzeugt daraufhin das Signal 162.

Beispielsweise wird so vorgegangen, dass sich zunächst die Teilnehmer A, B und C gegenseitig über das Netzwerk 100 authentifizieren. Nach Austausch eines Session Keys zwischen den Telekommunikationsgeräten 118, 118' und 118" wird die Sprachkommunikation zwischen den Teilnehmern A, B und C verschlüsselt und signiert übertragen. Aus dem von dem Teilnehmer B empfangenem Sprachsignal kann der Teilnehmer C die Sprachparameter des Teilnehmers B extrahieren, um daraus ein Sprachsignal zu synthetisieren, und zwar mit der Absicht, den Teilnehmer A hinsichtlich einer Äußerung des Teilnehmers B zu täuschen. Dieser Täuschungsversuch des Teilnehmers C muss jedoch fehlschlagen, da der Teilnehmer C keine korrekte Signatur für die synthetisierten Sprachdaten, das heißt insbesondere den Block 158', erzeugen kann.

Das o.g. Verfahren kann entsprechend auch für mehrere Teilnehmer verwendet werden.

### Bezugszeichenliste

- 100: Telekommunikationsnetzwerk
- 102, 102': elektronischer Speicher
- 104, 104': Teilnehmer-Identitätsdaten
- 106, 106': PIN
- 108, 108': geheimer Schlüssel
- 110, 110': öffentlicher Schlüssel
- 112, 112': Zertifikat
- 114, 114': Mikroprozessor
- 116, 116': Programmkomponente
- 118, 118': Telekommunikationsgerät
- 120, 120': Kartenleser
- 122, 122': Mikroprozessor
- 124, 124': Programmkomponente
- 126, 126': Programmkomponente
- 128, 128': Programmkomponente
- 130, 130': Programmkomponente
- 132, 132': Programmkomponente
- 134, 134': Applet
- 136, 136': Speicher
- 138: Zufallszahl
- 140: digitale Signatur
- 142: verschlüsselter Session Key
- 144: Programmkomponente
- 146: Abtastwert
- 148: Mikrophon
- 150: Wandler
- 152: Datenkompressionsmodul
- 154: Datendekompressionsmodul
- 156: Wandler
- 158, 158': Block
- 160, 160': Signatur
- 162: Signal
- 164: Modul
- 166: Speicher

## Patentansprüche

1. Telekommunikationsverfahren mit folgenden Schritten:
- Aufbau eines Sprachkanals zur Sprachkommunikation zwischen einem ersten Teilnehmer und einem zweiten Teilnehmer zwischen einem ersten Telekommunikationsgerät (118) des ersten Teilnehmers und einem zweiten Telekommunikationsgerät (118') des zweiten Teilnehmers, wobei zumindest das zweite Telekommunikationsgerät ein Sicherheitsmodul aufweist, auf dem Teilnehmer-Identitätsdaten des zweiten Teilnehmers für den Aufbau des Sprachkanals und ein geheimer Schlüssel (108') des zweiten Teilnehmers gespeichert sind, und wobei das Sicherheitsmodul einen Prozessor (114') zur Generierung einer digitalen Signatur (140) mit Hilfe des geheimen Schlüssels aufweist,
- Übertragung von Daten (138, 140) über den Sprachkanal zur Authentifizierung des zweiten Teilnehmers gegenüber dem ersten Teilnehmer mit Hilfe eines Challenge-Response-Verfahrens, wobei zur Durchführung des Challenge-Response-Verfahrens durch den Prozessor die digitale Signatur generiert wird, und wobei der zweite Teilnehmer gegenüber dem ersten Teilnehmer als authentifiziert gilt, wenn das Challenge-Response-Verfahren erfolgreich durchgeführt worden ist,
- Sprachkommunikation zwischen dem ersten Teilnehmer und dem zweiten Teilnehmer über den Sprachkanal, wobei digitalisierte Sprachdaten (158), die zur Übertragung von dem zweiten Teilnehmer an den ersten Teilnehmer über den Sprachkanal vorgesehen sind, von dem zweiten Teilnehmer blockweise signiert werden, wobei die Signaturen (160) von dem zweiten Teilnehmer an den ersten Teilnehmer übertragen werden, und wobei der erste Teilnehmer die Signaturen prüft, um sicherzustellen, dass die Sprachdaten tatsächlich von dem zweiten Teilnehmer empfangen werden, wobei das Challenge-Response-Verfahren zwischen den Telekommunikationsgeräten des ersten und des zweiten Teilnehmers durchgeführt wird.

2. Telekommunikationsverfahren nach Anspruch 1, wobei der Aufbau des Sprachkanals über ein Telekommunikationsnetz (100), insbesondere ein digitales Mobilfunknetz erfolgt.

3. Telekommunikationsverfahren nach Anspruch 1 oder 2, wobei es sich bei dem Sicherheitsmodul um eine Chipkarte handelt, die sich in einem Chipkarten-Leser (120') des zweiten Telekommunikationsgerät befindet.

4. Telekommunikationsverfahren nach einem der vorhergehenden Ansprüche, wobei zur Durchführung des Challenge-Response-Verfahrens von dem ersten Telekommunikationsgerät an das zweite Telekommunikationsgerät eine Kennung (138) übertragen wird, aus der Kennung durch den Prozessor (114') mit Hilfe des geheimen Schlüssels (108') des zweiten Teilnehmers die Signatur (140) generiert wird, die Signatur von dem zweiten Telekommunikationsgerät an das erste Telekommunikationsgerät über den Sprachkanal übertragen wird, die Signatur von dem ersten Telekommunikationsgerät entschlüsselt wird, und die entschlüsselte Signatur mit der Kennung verglichen wird, wobei der zweite Teilnehmer als gegenüber dem ersten Teilnehmer authentifiziert gilt, wenn die entschlüsselte Signatur mit der Kennung übereinstimmt.

5. Telekommunikationsverfahren nach einem der vorhergehenden Ansprüche, wobei nach der Authentisierung ein biometrischer Schlüssel zwischen den ersten und zweiten Telekommunikationsgeräten zur Verschlüsselung der nachfolgenden Sprachkommunikation ausgetauscht wird.

6. Telekommunikationsverfahren nach einem der vorhergehenden Ansprüche, wobei der Sprachkanal über ein TDMA-Verfahren aufgebaut wird, und wobei die Signierung und/oder Verschlüsselung von digitalisierten Sprachdaten für jeden Zeitschlitz oder eine vorgegebene Anzahl von Zeitschlitzen des TDMA-Verfahrens erfolgt.

7. Telekommunikationsverfahren nach einem der vorhergehenden Ansprüche, wobei der Sprachkanal über ein CDMA -Verfahren aufgebaut wird, und wobei die Signierung und/oder Verschlüsselung von digitalisierten Sprachdaten für jeden chip oder eine vorgegebene Anzahl von chips des CDMA -Verfahrens erfolgt.

8. Telekommunikationsverfahren nach einem der vorhergehenden Ansprüche, wobei das Telekommunikationsverfahren für mehrere erste und zweite Teilnehmer durchgeführt wird.

9. Computerprogrammprodukt mit von einem Telekommunikationsgerät ausführbaren Programminstruktionen zur Durchführung eines Telekommunikationsverfahrens nach einem der vorhergehenden Ansprüche.

10. Telekommunikationsgerät eines zweiten Teilnehmers mit:
- Mitteln (122, 122') zum Aufbau eines Sprachkanals zur Sprachkommunikation zwischen dem zweiten und einem ersten Teilnehmer,
- Schnittstellenmitteln (120, 120') für ein Sicherheitsmodul auf dem Teilnehmeridentitätsdaten (104, 104') für den Aufbau des Sprachkanals und ein geheimer Schlüssel (108, 108') des zweiten Teilnehmers gespeichert sind, und wobei das Sicherheitsmodul einen Prozessor (114, 114') zur Generierung einer digitalen Signatur mit Hilfe des geheimen Schlüssels aufweist,
- Mitteln (122, 124, 126, 134; 122' 124', 126', 134') zur Durchführung eines Challenge-Response-Verfahrens durch Übertragung von Daten über den Sprachkanal, wobei zur Durchführung des Challenge-Response-Verfahrens eine digitale Signatur von dem Prozessor des Sicherheitsmoduls generierbar ist,
- Mitteln (116, 116') zur blockweisen Signierung von digitalisierten Sprachdaten (158), die zur Übertragung von dem zweiten an den ersten Teilnehmer über den Sprachkanal vorgesehen sind, wobei die Signaturen über den Sprachkanal von dem zweiten an den ersten Teilnehmer übertragen werden, wobei das Challenge-Response-Verfahren zwischen den Telekommunkationsgeräten des ersten und des zweiten Teilnehmers durchgeführt wird.

11. Telekommunikationsgerät nach Anspruch 10, wobei es sich bei dem Sicherheitsmodul um ein Tamper Proof Module (TPM) handelt, welches einen integralen Bestandteil des Telekommunikationsgeräts bildet.

12. Telekommunikationsgerät nach Anspruch 10 oder 11, mit Mitteln (126, 126') zur Überprüfung der Signaturen von über den Sprachkanal empfangenen Sprachdaten und mit Mitteln zur Generierung eines Signals (162) für eine Nutzerschnittstelle, wenn eine der Überprüfungen fehlschlägt.

13. Telekommunikationsgerät nach einem der Ansprüche 10 bis 12, mit Konferenzschaltungsmitteln zur Sprachkommunikation mehrerer Teilnehmer in einer Telefonkonferenz.

14. Telekommunikationsgerät nach einem der Ansprüche 10 bis 13, wobei die Mittel zum Aufbau eines Sprachkanals zur Durchführung einer TDMA-Kommunikation ausgebildet sind, und wobei die Signierung und/oder Verschlüsselung von digitalisierten Sprachdaten für jeden Zeitschlitz oder eine vorgegebene Anzahl von Zeitschlitzen des TDMA-Verfahrens erfolgt.

15. Telekommunikationsgerät einem der Ansprüche 10 bis 14, wobei die Mittel zum Aufbau eines Sprachkanals zur Durchführung einer CDMA -Kommunikation ausgebildet sind, und wobei die Signierung und/oder Verschlüsselung von digitalisierten Sprachdaten für jeden chip oder eine vorgegebene Anzahl von chips des CDMA -Verfahrens erfolgt

## Claims

1. A telecommunication method having the following steps:
- establishing a speech channel for voice communication between a first and a second subscriber between a first telecommunication device (118) of the first subscriber and a second telecommunication device (118') of the second subscriber, wherein at least the second telecommunication device comprises a security module on which subscriber identification data of the second subscriber for establishing the speech channel and a secret key (108') of the second subscriber are stored, and wherein the security module comprises a processor (114') for generating a digital signature (140) using said secret key;
- transmitting data (138, 140) via the speech channel for authentication of the second subscriber to the first subscriber by means of a challenge-response process, the digital signature being generated by the processor in order to carry out the challenge-response process, and wherein the second subscriber is considered to be authenticated to the first subscriber when the challenge-response process is carried out successfully;
- voice communication between the first subscriber and the second subscriber via the speech channel, wherein digitalised speech data (158) to be transmitted from the second subscriber to the first subscriber via the speech channel is signed on a block basis by the second subscriber, wherein the signatures (160) are transmitted from the second subscriber to the first subscriber, and wherein the first subscriber checks the signatures in order to ensure that the speech data has actually been received by the second subscriber,
wherein the challenge-response process is carried out between the telecommunication devices of the first and second subscriber.

2. The telecommunication method according to claim 1, wherein the speech channel is established via a telecommunication network (100), in particular a digital mobile network.

3. The telecommunication method according to claim 1 or 2, wherein the security module is a chip card that is located in a chip card reader (120') of the second telecommunication device.

4. The telecommunication method according to any one of the preceding claims, wherein in order to carry out the challenge-response process an identifier (138) is transmitted from the first telecommunication device to the second telecommunication device, the signature (140) is generated from the identifier by the processor (114') using the secret key (108') of the second subscriber, the signature is transmitted from the second telecommunication device to the first telecommunication device via the speech channel, the signature is decrypted by the first telecommunication device, and the decrypted signature is compared with the identifier, wherein the second subscriber is considered to be authenticated to the first subscriber if the decrypted signature matches the identifier.

5. The telecommunication method according to any one of the preceding claims, wherein after the authentication a biometric key is exchanged between the first and second telecommunication devices for encrypting the following voice communication.

6. The telecommunication method according to any one of the preceding claims, wherein the speech channel is established via a TDMA process, and wherein the digitalised speech data is signed and/or encrypted for each time slot or a predefined number of time slots of the TDMA process.

7. The telecommunication method according to any one of the preceding claims, wherein the speech channel is established via a CDMA process, and wherein digitalised speech data is signed and/or encrypted for each chip or a predefined number of chips of the CDMA process.

8. The telecommunication method according to any one of the preceding claims, wherein the telecommunication method is carried out for a plurality of first and second subscribers.

9. A computer program product with program instructions executable by a telecommunication device for carrying out a telecommunication method according to any one of the preceding claims.

10. A telecommunication device of a second subscriber comprising:
- means (122, 122') for establishing a speech channel for voice communication between the second and the first subscriber,
- interface means (120, 120') for a security module on which subscriber identity data (104, 104') for establishing the speech channel and a secret key (108, 108') of the second subscriber are stored,
and wherein the security module comprises a processor (114, 114') for generating a digital signature with the aid of the secret key,
- means (122, 124, 126, 134; 122', 124', 126', 134') for carrying out a challenge-response process by transmitting data via the speech channel, wherein a digital signature can be generated by the processor of the security module in order to carry out the challenge-response process,
- means (116, 116') for signing, on a block basis, digitalised speech data (158) to be transmitted from the second to the first subscriber via the speech channel, wherein the signatures are transmitted from the second to the first subscriber via the speech channel,
wherein the challenge-response process is carried out between the telecommunication devices of the first and second subscriber.

11. The telecommunication device according to claim 10, wherein the security module is a tamper proof module (TPM) which forms an integral part of the telecommunication device.

12. The telecommunication device according to claim 10 or 11, comprising means (126, 126') for checking the signatures of speech data received via the speech channel and comprising means for generating a signal (162) for a user interface if one of the checks fails.

13. The telecommunication device according to any one of claims 10 to 12, with teleconference means for voice communication of a number of subscribers in a teleconference.

14. The telecommunication device according to any one of claims 10 to 13, wherein the means are designed to establish a speech channel in order to carry out a TDMA communication, and wherein digitalised speech data is signed and/or encrypted for each time slot or a predefined number of time slots of the TDMA process.

15. The telecommunication device according to any one of claims 10 to 14, wherein the means are designed to establish a speech channel in order to carry out a CDMA communication, and wherein digitalised speech data is signed and/or encrypted for each chip or a predefined number of chips of the CDMA process.

## Revendications

1. Procédé de télécommunication avec les étapes suivantes :
- établissement d'un canal vocal pour une communication vocale entre un premier abonné et un deuxième abonné entre un premier appareil de télécommunication (118) du premier abonné et un deuxième appareil de télécommunication (118') du deuxième abonné, dans lequel au moins le deuxième appareil de télécommunication présente un module de sécurité sur lequel sont stockées des données d'identité d'abonné du deuxième abonné pour l'établissement du canal vocal et une clé secrète (108') du deuxième abonné, et où le module de sécurité présente un processeur (114') pour la génération d'une signature numérique (140) à l'aide de la clé secrète,
- transmission de données (138, 140) par le canal vocal pour l'authentification du deuxième abonné vis-à-vis du premier abonné à l'aide d'un procédé de défi et de réponse, où, pour l'exécution du procédé de défi et de réponse, la signature numérique est générée par le processeur, et où le deuxième abonné est considéré comme authentifié par rapport au premier abonné si le procédé de défi et de réponse a été exécuté avec succès,
- communication vocale entre le premier abonné et le deuxième abonné par l'intermédiaire du canal vocal, où les données vocales (158) numérisées qui sont prévues pour la transmission du deuxième abonné vers le premier abonné par l'intermédiaire du canal vocal sont signées sous forme de blocs par le deuxième abonné, où les signatures (160) sont transmises du deuxième abonné vers le premier abonné, et où le premier abonné vérifie les signatures afin de s'assurer que les données vocales sont effectivement reçues par le deuxième abonné,
où le procédé de défi et de réponse est effectué entre les appareils de télécommunications du premier et du deuxième abonné.

2. Procédé de télécommunication selon la revendication 1, dans lequel l'établissement du canal vocal a lieu par l'intermédiaire d'un réseau de télécommunication (100), notamment un réseau radio mobile numérique.

3. Procédé de télécommunication selon la revendication 1 ou la revendication 2, dans lequel, dans le cas du module de sécurité, il s'agit d'une carte à puce qui se trouve dans un lecteur de carte à puce (120') du deuxième appareil de télécommunication.

4. Procédé de télécommunication selon l'une des revendications précédentes, dans lequel, pour l'exécution du procédé de défi et de réponse, un identifiant (138) est transmis, la signature (140) est générée à partir de l'identifiant par le processeur (114') à l'aide de la clé secrète (108') du deuxième abonné, la signature est transmise du deuxième appareil de télécommunication vers le premier appareil de télécommunication par le biais du canal vocal, la signature est décryptée par le premier appareil de télécommunication et la signature décryptée est comparée avec l'identifiant, où, le deuxième abonné est considéré comme authentifié par rapport au premier abonné lorsque la signature décryptée correspond à l'identifiant.

5. Procédé de télécommunication selon l'une des revendications précédentes, dans lequel, après l'authentification, une clé biométrique est échangée entre les premier et second appareils de télécommunication pour le cryptage de la communication vocale suivante.

6. Procédé de télécommunication selon l'une des revendications précédentes, dans lequel le canal vocal est construit par un procédé à accès multiple par répartition dans le temps TDMA, et dans lequel la signature et/ou le cryptage de données vocales a lieu pour chaque intervalle de temps ou pour un nombre prédéterminé d'intervalles de temps du procédé TDMA.

7. Procédé de télécommunication selon l'une des revendications précédentes, dans lequel le canal vocal est établi par l'intermédiaire d'un procédé d'accès multiple par répartition en code CDMA et dans lequel la signature et/ou le cryptage de données vocales numériques a lieu pour chaque puce ou pour un nombre prédéterminé de puces du procédé CDMA.

8. Procédé de télécommunication selon l'une des revendications précédentes, dans lequel le procédé de télécommunication est effectué pour plusieurs premiers et deuxièmes abonnés.

9. Produit-programme informatique avec des instructions de programme exécutables par un appareil de télécommunication pour l'exécution d'un procédé de télécommunication selon l'une des revendications précédentes.

10. Appareil de télécommunication d'un deuxième abonné doté :
- de moyens (122, 122') pour l'établissement d'un canal vocal pour la communication vocale entre le deuxième et un premier abonné,
- de systèmes d'interfaces (120, 120') pour un module de sécurité sur lequel sont stockées des données d'identité d'abonné (104, 104') pour l'établissement du canal vocal et une clé secrète (108, 108') du deuxième abonné,
et dans lequel le module de sécurité présente un processeur (114, 114') pour la génération d'une signature numérique à l'aide de la clé sécrète,
- de moyens (122, 124, 126, 134 ; 122', 124', 126', 134') pour l'exécution d'un procédé de défi et de réponse par la transmission de données par l'intermédiaire du canal vocal, où, pour l'exécution du procédé de défi et de réponse, une signature numérique peut être générée par le processeur du module de sécurité,
- de moyens (116, 116') pour la signature sous forme de blocs de données vocales (158) numérisées, qui sont prévues pour la transmission du deuxième abonné vers le premier par l'intermédiaire du canal vocal, où les signatures sont transmises du deuxième vers le premier abonné par l'intermédiaire du canal vocal,
où le procédé de défi et de réponse est effectué entre les appareils de télécommunication du premier et du deuxième abonnés.

11. Appareil de télécommunication selon la revendication 10, dans lequel, dans le cas du module de sécurité, il s'agit d'un module infalsifiable (TPM) lequel forme un composant intégral de l'appareil de télécommunication.

12. Appareil de télécommunication selon la revendication 10 ou la revendication 11, doté de moyens (126, 126') pour la vérification des signatures de données vocales reçues par l'intermédiaire du canal vocal et doté de moyens pour la génération d'un signal (162) pour une interface d'utilisateur lorsqu'une des vérifications échoue.

13. Appareil de télécommunication selon l'une des revendications 10 à 12, doté de systèmes de commutation de conférence pour la communication vocale de plusieurs abonnés dans une conférence téléphonique.

14. Appareil de télécommunication selon l'une des revendications 10 à 13, où les moyens pour l'établissement du canal vocal sont conçus pour l'exécution d'une communication TDMA, et où la signature et/ou le cryptage de données vocales numériques a lieu pour chaque intervalle de temps ou pour un nombre prédéterminé d'intervalles de temps du procédé TDMA.

15. Appareil de télécommunication selon l'une des revendications 10 à 14, dans lequel les moyens pour l'établissement d'un canal vocal sont conçus pour l'exécution d'une communication CDMA, et dans lequel la signature et/ou le cryptage de données vocales numérisées a lieu pour chaque puce ou pour un nombre prédéterminé de puces du procédé CDMA.
